# EUROPÄISCHE PATENTSCHRIFT

(11) **EP 2 777 830 B1**
(45) Veröffentlichungstag und Bekanntmachung des Hinweises auf die Patenterteilung: **17.08.2016**
(21) Anmeldenummer: 14151846.4
(22) Anmeldetag: 21.01.2014
(51) Int. Cl.: B08B 3/02, B08B 13/00, B65G 45/22

(54) **Verfahren und Vorrichtung zum Reinigen eines Transportsegments**
Method ans apparatus for cleaning a transport segment
Procédé et appareil pour nettoyer un segment de transport

(30) Priorität: 21.02.2013 DE 102013202847
(43) Veröffentlichungstag der Anmeldung: 17.09.2014
(73) Patentinhaber: Krones AG, 93073 Neutraubling (DE)
(72) Erfinder: Wahl, Matthias, 93073 Neutraubling (DE); Seger, Martin, 93073 Neutraubling (DE)
(74) Vertreter: Grünecker Patent- und Rechtsanwälte PartG mbB

(56) Entgegenhaltungen:
- WO-A1-2012/034641
- DE-A1-102010 045 268

## Beschreibung

Die Erfindung betrifft ein Verfahren zum Reinigen eines Transportsegments mit den Merkmalen des Oberbegriffs von Patentanspruch 1 sowie eine Behälterbehandlungsanlage mit den Merkmalen des Oberbegriffs von Patentanspruch 10.

In einer Behälterbehandlungsanlage sind üblicherweise zwischen einzelnen Verarbeitungsmaschinen Transportsegmente angeordnet, die die Behälter jeweils von einer dem Transportsegment vorlaufenden zu einer nachlaufenden Verarbeitungsmaschine transportieren. In unterschiedlichen Verarbeitungsmaschinen werden dabei die Behälter hergestellt, gereinigt, befüllt, verschlossen, etikettiert und verpackt.

Bei nasslaufenden Transportsegmenten wird dabei kontinuierlich ein Reinigungs- und Schmiermittel auf das Förderband gesprüht, um einerseits Rückstände zu entfernen und andererseits die Lager des Transportsegments zu schmieren. Als Reinigungs- und Schmiermittel kommt dabei üblicherweise eine wässrige Lösung basierend auf Seifen- oder Aminformulierungen zum Einsatz. Nachteilig dabei ist der hohe Wasserverbrauch und dass ein Etikett im Bereich des Behälterbodens von dem Reinigungsmittel beschädigt werden kann.

Hierzu schlägt die US 4 226 325 ein Transportsegment mit einer Trockenschmierung vor, bei dem ein getrennter Schmiermittel- und Reinigungskreislauf vorgesehen ist. Die Schmierung der Lager erfolgt dabei während des Transports von der Innenseite des Transportbands her. Hierdurch gelangt kein Schmiermittel auf die Außenseite des Transportbands und folglich werden die Etiketten durch die Schmierung nicht beeinträchtigt. Bei einer Abschaltung des Transportbands erfolgt ein automatischer Reinigungsbetrieb, bei dem das Transportband von der Innen- und Außenseite mit Reinigungsmittel besprüht und gereinigt wird. Nachteilig hierbei ist, dass die Reinigung lediglich beim Abschalten des Transportbands erfolgt und sich folglich bei einem langen Betrieb des Transportbands starke Ablagerungen bilden können.

Die WO 02/20381 A1 offenbart ein Verfahren, bei dem die Reinigung und Schmierung vollautomatisch durch eine Steuerung vorgenommen werden kann, wobei der Reinigungsbetrieb variabel programmierbar ist. Nachteilig hierbei ist, dass die Transportsegmente nur in größeren Intervallen innerhalb gesonderter Reinigungsschichten gereinigt werden können, wobei die Produktion unterbrochen werden muss.

Die DE 10 2010 045 268 A1 beschreibt ein gattungsgemäßes Verfahren.

Aufgabe der vorliegenden Erfindung ist es, ein wirtschaftlich effizienteres Reinigungsverfahren für ein Transportsegment in einer Behälterbehandlungsanlage bereitzustellen.

Die Erfindung löst diese Aufgabe bei einem Verfahren zum Reinigen eines Transportsegments mit den Merkmalen des Oberbegriffs des Anspruchs 1 mit den Merkmalen des kennzeichnenden Teils, gemäß dem der Reinigungsbetrieb für das Transportsegment bei einem störungsbedingten Betriebsstillstand einer vor- und/oder nachlaufenden Verarbeitungsmaschine ausgelöst wird.

Im Stand der Technik wird der reguläre Produktionsbetrieb für die Reinigung des Transportsegments innerhalb gesonderter Reinigungsschichten unterbrochen. Bei dem erfindungsgemäßen Verfahren werden die ohnehin zufällig auftretenden Störzeiten dazu genutzt, um das Transportsegment wenigstens teilweise zu reinigen. Anders ausgedrückt wird bei dem erfindungsgemäßen Verfahren der Reinigungsbetrieb des Transportsegments bei einem störungsbedingten Betriebsstillstand ausgelöst und die Zeit bis zur Störungsbeseitigung zusätzlich für die Reinigung des Transportsegments genutzt. Hierdurch werden in der Folge Produktionsausfallzeiten für eine gesonderte Reinigung des Transportsegments eingespart und das Reinigungsverfahren ist wirtschaftlich effizienter.

Die Behälterbehandlungsanlage kann eine Getränkeverarbeitungsanlage sein. Die Behälterbehandlungsanlage kann dazu vorgesehen sein, ein flüssiges oder pastöses Produkt in Behälter abzufüllen, diese zu verschließen und anschließend zu verpacken. Die Verarbeitungsmaschine kann eine Behälterherstellungsmaschine (beispielsweise eine Streckblasmaschine), ein Rinser, ein Füller, ein Verschließer oder eine Verpackungsmaschine sein. Die Behälterbehandlungsanlage kann dabei mehrere Verarbeitungsmaschinen umfassen. Zwischen zwei aufeinander folgenden Verarbeitungsmaschinen kann wenigstens ein Transportsegment angeordnet sein. Zusätzlich können auch zwei aufeinander folgende Verarbeitungsmaschinen direkt ohne Transportsegment miteinander verbunden sein. Der störungsbedingte Betriebsstillstand kann eine Folge einer Störung sein, insbesondere wobei ein regulärer Produktionsbetrieb der Maschine durch die Störung unterbrochen wird.

Das Transportsegment kann zum Fördern von Behältern ausgebildet sein. Im Rahmen dieser Anmeldung soll unter dem Transportsegment wenigstens ein Teilbereich zwischen der vorlaufenden und der nachlaufenden Verarbeitungsmaschine verstanden werden, der wenigstens einen Transporteur umfasst. Insbesondere kann darunter der gesamte Transportweg für die Behälter zwischen der vorlaufenden und der nachlaufenden Verarbeitungsmaschine verstanden werden. Das Transportsegment kann als Förderband ausgebildet sein, das auf wenigstens zwei Rollen gelagert ist. Das Transportsegment kann zum Fördern der Behälter eine Gliederbandkette mit einer Vielzahl von Gliedern umfassen, wobei benachbarte Glieder über Bolzen und Gelenkaugen miteinander verbunden sind. Alternativ kann das Transportsegment als Förderstern (Karussell) ausgebildet sein, insbesondere wobei die Behälter am Behälterhals oder am Behälterboden aufgenommen werden.

Der Reinigungsbetrieb kann mittels einer Reinigungseinrichtung erfolgen, die insbesondere ein Reinigungsmittel auf das Transportsegment aufbringt. Die Reinigungseinrichtung kann Düsen, Schläuche und/oder Rohre zum Verteilen des Reinigungsmittels auf dem Transportsegment umfassen. Das Reinigungsmittel kann herkömmliches Wasser oder eine wässrige Lösung sein, die insbesondere auf einer Seifen- oder Aminrezeptur basiert.

Der Reinigungsbetrieb kann automatisch oder manuell ausgelöst werden. Beispielsweise kann die Störung von der betroffenen Verarbeitungsmaschine automatisch erkannt und der störungsbedingte Betriebsstillstand automatisch ausgelöst werden. Dabei kann einer Bedienperson mithilfe eines Alarmsignals der störungsbedingte Betriebsstillstand angezeigt werden, insbesondere wobei der Reinigungsbetrieb parallel oder zeitverzögert zum Alarmsignal automatisch ausgelöst wird. Alternativ kann die Bedienperson den Reinigungsbetrieb manuell auslösen, insbesondere über ein Bedienelement an der Verarbeitungsmaschine oder am Transportsegment.

Wenigstens eine Steuereinrichtung kann dazu ausgebildet sein, die Verarbeitungsmaschine, das Transportsegment und/oder die Reinigungseinrichtung zu steuern. Jede mögliche Kombination hieraus ist möglich. Eine Steuereinrichtung kann als Anlagensteuerung zur Steuerung der gesamten Behälterbehandlungsanlage ausgebildet sein, der insbesondere weitere Steuereinrichtungen zur Steuerung der Verarbeitungsmaschinen untergeordnet sind. Die Steuereinrichtung kann eine Maschinensteuerung (SPS) sein. Die Steuereinrichtung kann ein Bedienelement zur manuellen Auslösung des Reinigungsbetriebs umfassen.

Der Reinigungsbetrieb kann nach einer Störungsbehebung der vor- und/oder nachlaufenden Verarbeitungsmaschine abgebrochen werden, auch wenn keine vollständige Reinigung des Transportsegments erfolgt ist. Hierdurch wird der Betrieb der Behälterbehandlungsanlage nicht länger als notwendig unterbrochen. Der Reinigungsbetrieb kann manuell oder automatisch abgebrochen werden. Während der Störungsbehebung kann die Störung, die zum störungsbedingten Betriebsstillstand geführt hat, behoben werden. Nach der Störungsbehebung kann der reguläre Produktionsbetrieb wieder aufgenommen werden. Bei einem weiteren störungsbedingten Betriebsstillstand wenigstens einer vor- und/oder nachlaufenden Verarbeitungsmaschine kann dann der Reinigungsbetrieb für das Transportsegment fortgesetzt werden. Hierdurch wird in zufälliger Weise bei einem längeren Betrieb der Behälterbehandlungsanlage das gesamte Transportsegment gereinigt.

Nach dem Reinigungsbetrieb können Daten darüber erfasst und gespeichert werden, welche Abschnitte des Transportsegments innerhalb des Reinigungsbetriebs gereinigt wurden. Hierdurch kann für den weiteren Reinigungsbetrieb ermittelt werden, welche Abschnitte des Transportsegments bereits beim vorangegangenen Reinigungsbetrieb gereinigt wurden. Dadurch kann eine effizientere Reinigung des gesamten Transportsegments bei aufeinanderfolgenden störungsbedingten Betriebsstillzuständen erfolgen. Abschnitte des Transportsegments kann bedeuten, dass das Transportsegment in mehrere Reinigungsabschnitte unterteilt wird, die jeweils bei einem Reinigungsbetrieb komplett gereinigt oder nicht gereinigt wurden. Die Abschnitte des Transportsegments können feste oder variable Größen haben. Bei einem Transportstern kann ein Abschnitt des Transportsegments ein Sektor des Sterns mit einer Behälteraufnahme sein. Die Daten können in der Steuereinrichtung und/oder einer Datenbank gespeichert werden.

Wenigstens ein Parameter des Reinigungsbetriebs kann abhängig von einer Kenngröße der Störung der vor- und/oder nachlaufenden Verarbeitungsmaschine ermittelt werden. Hierdurch kann die Reinigung des Transportsegments besonders effizient erfolgen. Die Kenngröße der Störung kann beispielsweise eine Information sein, ob die Störung automatisch oder durch eine Bedienperson behoben werden muss. Ebenso kann die Kenngröße ein Störungstyp, eine voraussichtliche Zeitdauer zur Behebung der Störung, eine Strecke von der Störung bis zum Transportsegment und/oder der Typ der von der Störung betroffenen Verarbeitungsmaschine sein. Die Strecke kann insbesondere eine Strecke entlang eines Förderwegs zwischen der Störung und dem Transportsegment sein.

Der Parameter kann die Dauer des Reinigungsbetriebs sein. Hierdurch kann über die Kenngröße der Störung ein Zeitlimit für den Reinigungsbetrieb vorausgesagt werden und darauf basierend der Reinigungsbetrieb effizienter ausgeführt werden. Beispielsweise kann hierdurch im Voraus ermittelt werden, wie viele Abschnitte des Transportsegments gereinigt werden können.

Bei einer Lücke im Behälterstrom können die Abschnitte des Transportsegments entsprechend der Fortpflanzung der Lücke nacheinander gereinigt werden. Dadurch kann auch eine, durch eine kurzzeitige Störung verursachte Lücke für die Reinigung genutzt werden.

Der Reinigungsbetrieb kann unmittelbar nach dem Auslösen abhängig von einer Kenngröße der Störung der vor- und/oder nachlaufenden Verarbeitungsmaschine automatisch abgebrochen werden. Beispielsweise kann die Kenngröße der Störung hierbei die voraussichtliche Zeitdauer zur Behebung der Störung sein. Hierdurch kann bei einer voraussichtlich sehr kurzen Dauer der Störung vermieden werden, dass eine sehr kurze und damit ineffiziente Reinigung des Transportsegments erfolgt. Die voraussichtliche Zeitdauer zur Behebung der Störung, bei der der Reinigungsbetrieb abgebrochen wird, kann in einem Bereich von 0 bis 10 Minuten, insbesondere in einem Bereich von 0 bis 1 Minute sein.

Insbesondere können Steuersignale zur Auslösung des Reinigungsbetriebs und/oder Daten mit den Kenngrößen des Betriebsstillstands über einen Steuerungsbus übertragen werden. Hierdurch kann die Behälterbehandlungsanlage modular aufgebaut werden und ist dadurch besonders flexibel einsetzbar. Der Steuerungsbus kann dazu ausgebildet sein, die Verarbeitungsmaschine mit der Steuereinrichtung zum Austausch von Daten zu verbinden. Der Steuerungsbus kann ein CAN-Bus, ein Ethernet, ein DeviceNet, ein ProfiNet und/oder ein ProfiBus sein. Mehrere Steuereinrichtungen können über den Steuerungsbus miteinander verbunden sind. Die Steuereinrichtung kann über den Steuerungsbus mit der Anlagensteuerung verbunden sein.

Das Transportsegment kann mittels der Steuereinrichtung leer gefahren werden. Danach sind keine Behälter auf dem zu reinigenden Transportsegment angeordnet und die Reinigung kann ohne Beeinträchtigung der bereits verarbeiteten Behälter erfolgen. Zusätzlich kann eine besonders umfassende und vollflächige Reinigung des Transportsegments erfolgen.

Der Reinigungsbetrieb kann vor oder nach einer Schlafsteuerung des Transportsegments eingeleitet werden. Schlafsteuerung kann bedeuten, dass dies ein Steuerungsmodus des Transportsegments ist, der bei einem störungsbedingten Betriebsstillstand automatisch aktiviert wird und der das Transportsegment stillsetzt.

Insbesondere kann das Transportsegment mittels der Schlafsteuerung nach einer Reinigung stillgesetzt und in Bereitschaft gehalten werden.

Darüber hinaus stellt die Erfindung mit dem Anspruch 10 eine Behälterbehandlungsanlage bereit, insbesondere zur Durchführung des Verfahrens nach Anspruch 1, mit wenigstens einem Transportsegment und wenigstens einer dem Transportsegment vor- und/oder nachlaufenden Verarbeitungsmaschine, wobei eine Reinigungseinrichtung zur Reinigung des Transportsegments ausgebildet ist, dadurch gekennzeichnet, dass eine Steuereinrichtung dazu ausgebildet ist, dass der Reinigungsbetrieb für das Transportsegment bei einem störungsbedingten Betriebsstillstand einer vor- und/oder nachlaufenden Verarbeitungsmaschine automatisch ausgelöst wird.

Dadurch, dass die Steuereinrichtung dazu ausgebildet ist, dass der Reinigungsbetrieb für das Transportsegment bei einem störungsbedingten Betriebsstillstand einer vor- und/oder nachlaufenden Verarbeitungsmaschine automatisch ausgelöst wird, kann der Reinigungsbetrieb während eines Zeitraums veranlasst werden, innerhalb dessen die Behälterbehandlungsanlage durch eine Störung bereits stillsteht. In der Folge werden keine gesonderten Reinigungsschichten für den Reinigungsbetrieb benötigt, wodurch der Betrieb der Behälterbehandlungsanlage effizienter ist. Darüber hinaus kann die Reinigung in kleineren Zeitintervallen erfolgen.

Die Behälterbehandlungsanlage, die Verarbeitungsmaschine, das Transportsegment, die Reinigungseinrichtung und die Steuereinrichtung können insbesondere Vorrichtungsmerkmale des zuvor beschriebenen Verfahrens einzeln oder in Kombination aufweisen.

Darüber hinaus kann die Steuereinrichtung dazu ausgebildet sein, die Verarbeitungsmaschine, das Transportsegment und/oder die Reinigungseinrichtung zu steuern. Die Verarbeitungsmaschine kann eine eigene Steuereinrichtung umfassen. Die Steuereinrichtung kann eine Maschinensteuerung sein und insbesondere einen Mikroprozessor, einen Bildschirm und/oder eine Tastatur umfassen.

Die Behälter, die mit der Anlage behandelt werden, können Flaschen, Dosen und/oder Tuben sein. Die Behälterbehandlungsanlage kann dazu ausgebildet sein, mit den Verarbeitungsmaschinen die Behälter herzustellen, zu reinigen, zu befüllen, zu verschließen, zu etikettieren und/oder zu verpacken.

Die Steuereinrichtung kann mit einem Steuerungsbus verbunden sein. Der Steuerungsbus kann dazu ausgebildet sein, Daten und/oder Signale zwischen wenigstens zwei Steuereinrichtungen zu übertragen, insbesondere wobei eine erste Steuereinrichtung zur Steuerung der Verarbeitungsmaschine und eine zweite Steuereinrichtung zur Steuerung des Transportsegments vorgesehen ist. Dadurch kann das Transportsegment und die Verarbeitungsmaschine besonders flexibel in der Behälterbehandlungsanlage eingesetzt werden. Über den Steuerungsbus können Steuersignale zur Auslösung des Reinigungsbetriebs und/oder Daten mit Kenngrößen des Betriebsstillstands übertragbar sein.

Das Transportsegment kann zum Transport von Behältern eine Gliederbandkette mit einer Vielzahl von Gliedern umfassen, wobei benachbarte Glieder über Bolzen und Gelenkaugen miteinander verbunden sind. Somit können im Reinigungsbetrieb auch die Bolzen an den Verbindungsstellen der Glieder besonders gut gereinigt werden.

Weitere Merkmale und Vorteile der Erfindung werden nachfolgend anhand der in den Figuren dargestellten Ausführungsbeispiele erläutert. Dabei zeigt:
- Fig. 1: eine erfindungsgemäße Behälterbehandlungsanlage zur Durchführung des erfindungsgemäßen Verfahrens in einer seitlichen Ansicht beim regulären Betrieb;
- Fig. 2: die Behälterbehandlungsanlage aus Fig. 1 bei einer Störung;
- Fig. 3: die Behälterbehandlungsanlage der Fig. 1 und 2 beim Leerfahren des Transportsegments mittels der Schlafsteuerung; und
- Fig. 4: die Behälterbehandlungsanlage der Fig. 1 - 3 während des Reinigungsbetriebs.

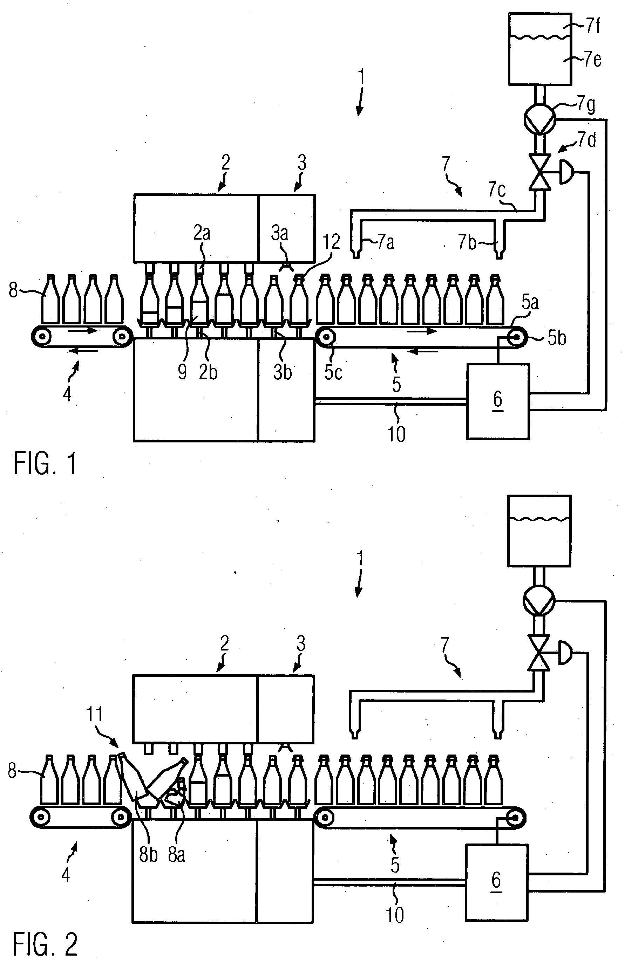

In der Fig. 1 ist eine erfindungsgemäße Behälterbehandlungsanlage 1 zur Durchführung des erfindungsgemäßen Verfahrens beim regulären Betrieb gezeigt. Hierbei ist eine Verarbeitungsmaschine als Füller 2 und eine weitere als Verschließer 3 ausgebildet. Zu sehen ist, dass mit dem Transportsegment 4 die Behälter 8 zum Füller 2 transportiert werden. Dort werden die Behälter 8 in den Behälteraufnahmen 2b aufgenommen und durch die Füllventile 2a mit einem Produkt 9 (z.B. ein Getränk) befüllt. Nach erfolgter Befüllung der Behälter 8 werden diese unmittelbar in die Behälteraufnahmen 3b des Verschließers 3 übergeben und mit einem Verschluss 12 versehen. Bei dem Füller 2 und dem Verschließer 3 können die Behälteraufnahmen 2b, 3b jeweils als Karussell oder als lineare Förderstrecke angeordnet sein. Anschließend werden die verschlossenen Behälter von dem Transportsegment 5 übernommen, mit dem sie beispielsweise zu einer Verpackungsmaschine transportiert werden (hier nicht dargestellt).

Das Transportsegment 5 ist hier als Förderband 5a ausgeführt, das über die beiden Rollen 5c, 5b läuft. Die Rolle 5b wird hier mit einem steuerbaren Motor angetrieben (hier nicht dargestellt). Darüber hinaus kann das Förderband 5a unterhalb der Behälter 8 durch weitere Rollen oder Auflagen unterstützt werden. Alternativ kann das hier dargestellte Transportsegment 5 als Transportstern ausgebildet sein.

Darüber hinaus ist die Reinigungseinrichtung 7 zu sehen, wobei ein Reinigungsmittel 7e in einem Vorratstank 7f gelagert wird. Das Reinigungsmittel 7e kann über eine hier nicht dargestellte Pumpe und das steuerbare Ventil 7d in die Leitung 7c gedrückt werden und anschließend mit den Düsen 7a, 7b auf das Förderband 5a versprüht werden. Die Reinigungsdüsen 7a, 7b sind hier oberhalb des Transportsegments 5 angeordnet, diese können jedoch alternativ auch seitlich, unterhalb und/oder innerhalb des Transportsegments zur Reinigung angeordnet sein. Darüber hinaus kann die Reinigungseinrichtung 7 ein Mehrwegeventil und wenigstens einen weiteren Vorratsbehälter mit einem zweiten Reinigungs- oder Spülmittel umfassen, das eine andere Rezeptur aufweist als das Reinigungsmittel 7e. Die Reinigungseinrichtung 7 kann auch mit einer Wasser- und/oder Abwasserleitung verbunden sein. Dabei kann zunächst Reinigungsmittel 7e auf das Transportsegment 5 versprüht werden, das anschließend mit einem Spülmittel, wie beispielsweise Wasser, abgespült wird. Zusätzlich ist eine hier nicht dargestellte Auffangvorrichtung dazu vorgesehen, das Reinigungsmittel 7e nach dem Reinigen aufzufangen.

Die Steuereinrichtung 6 ist dazu ausgebildet, das Transportsegment 5, die Pumpe 7g und das steuerbare Ventil 7d über entsprechende Steuerleitungen zu steuern. Dadurch kann sowohl der Transport der Behälter 8 im regulären Betrieb, als auch der Reinigungsbetrieb des Transportsegments 5 gesteuert werden.

Mit den Fig. 2 - 4 wird im Folgenden das erfindungsgemäße Verfahren genauer erläutert:
In Fig. 2 ist die erfindungsgemäße Behälterbehandlungsanlage 1 aus der Fig. 1 bei einer Störung zu sehen. Die Störung wird hier beispielsweise durch den Stau 11 im Eingangsbereich des Füllers 2 verursacht. Zu sehen ist, dass ein Behälter 8a beim Befüllen zerbrochen ist und die nachfolgenden Behälter 8b sich infolgedessen anstauen. Die Störung führt in der Folge zu einem störungsbedingten Betriebsstillstand des Füllers 2.

Bei dem erfindungsgemäßen Verfahren wird in Folge des störungsbedingten Betriebsstillstands von dem Füller 2 ein Steuersignal zur Auslösung des Reinigungsbetriebs über den Steuerungsbus 10 an die Steuereinrichtung 6 gesendet. Darüber hinaus übermittelt der Füller 2 der Steuereinrichtung 6 Daten mit Kenngrößen der Störung, beispielsweise hier die zu erwartende Zeitdauer bis zur Beseitigung des Staus 11. Ist diese Dauer beispielsweise kleiner als 5 Minuten, so wird der Reinigungsbetrieb unmittelbar abgebrochen, da in einer solch kurzen Zeitdauer kein effizienter Reinigungsbetrieb erfolgen kann.

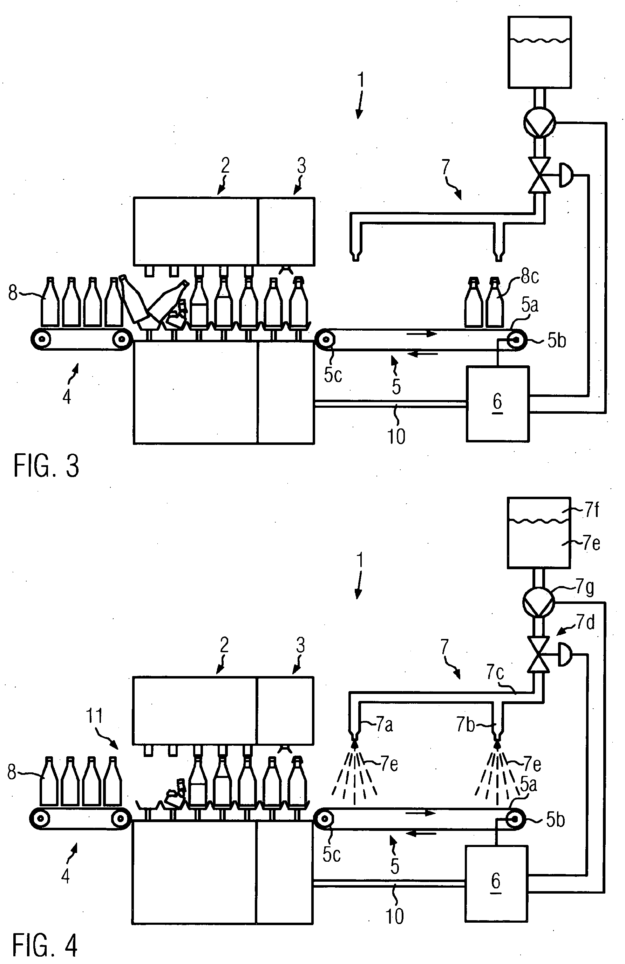

In Fig. 3 ist die Behälterbehandlungsanlage der Fig. 1 und 2 zu sehen, wobei das Transportsegment 5 mittels der Steuereinrichtung 6 leer gefahren wird. Zu sehen ist, dass die auf dem Transportsegment 5 verbleibenden Behälter 8c solange weitertransportiert werden, bis auf dem Transportsegment 5 keine Behälter 8c mehr vorhanden sind. Dies erfolgt mittels der Steuereinrichtung 6 des Transportsegments 5, wobei zunächst detektiert wird, wie viele verbleibende Behälter 8c sich noch auf dem Transportsegment 5 befinden und anschließend berechnet die Steuereinrichtung 6, wie lange das Transportsegment 5 aktiviert bleiben muss, bis es leer gefahren ist.

Gleichzeitig ist zu sehen, dass keine Förderung der Behälter 8 im Transportsegment 4 sowie im Füller 2 und im Verschließer 3 erfolgt.

In Fig. 4 ist die Behälterbehandlungsanlage 1 zu sehen, wobei das Transportsegment 5 gereinigt wird. Im dargestellten Fall benötigt die Beseitigung des Staus 11 länger als die in der Steuereinrichtung 6 programmierte Zeitschwelle von einer Minute. Demzufolge wird nun der Reinigungsbetrieb für das Transportsegment 5 gestartet, indem das Förderband 5a über die Rollen 5b und 5c weiter in Bewegung gehalten wird. Gleichzeitig werden das Förderband 5a sowie die Rollen 5b und 5c über die Düsen 7a, 7b mit dem Reinigungsmittel 7e besprüht. Hierzu aktiviert die Steuereinrichtung 6 die Pumpe 7g und öffnet das gesteuerte Ventil 7d. Hierdurch wird das in dem Vorratsbehälter 7f gelagerte Reinigungsmittel 7e in die Leitung 7c gepumpt und zu den Düsen 7a, 7b geleitet.

Bei der Reinigung kann sowohl Reinigungsmittel 7e als auch Spülmittel durch die Düsen 7a, 7b versprüht werden.

Der Reinigungsbetrieb endet entweder nach einer vorbestimmten maximalen Zeitdauer oder nach der Beseitigung der Störung. In diesem Fall ist die Störung durch den Stau 11 vor Beendigung der maximalen Reinigungsdauer beseitigt und die Verarbeitungsmaschine 2 sendet ein Signal über den Steuerungsbus 10, dass die Behälterbehandlungsanlage 1 wieder den regulären Betrieb aufnehmen kann. In der Folge wird durch die Beseitigung der Störung der Reinigungsbetrieb abgebrochen, auch wenn keine vollständige Reinigung des Transportsegments 5 erfolgt ist.

Falls alternativ die Störung länger andauert als die Reinigungszeit für das gesamte Transportsegment 5, so wird anschließend das Transportsegment 5 mittels einer Schlafsteuerung stillgesetzt und in Bereitschaft für den regulären Betrieb gehalten.

Darüber hinaus speichert die Steuereinrichtung 6 ab, welche Abschnitte des Förderbands 5a während des Reinigungsbetriebs gereinigt wurden, um bei einer nachfolgenden Reinigung die weiteren Abschnitte bevorzugt zu reinigen.

Bereits bei Beginn des Reinigungsbetriebs wurde als Parameter die Dauer des Reinigungsbetriebs aufgrund der Kenngröße "voraussichtliche Dauer der Störung" ermittelt. Dadurch kann vermieden werden, dass nach der Störungsbeseitigung zusätzliche Zeit für die Beendigung des Reinigungsbetriebs benötigt wird. Beispielsweise müsste andernfalls bei einem Abbruch des Reinigungsbetriebs das Transportband 5a noch mit Wasser abgespült werden, um das Reinigungsmittel zu entfernen.

Es versteht sich, dass das dem Füller 2 vorgeordnete Transportsegment 4 ebenfalls über eine eigene Reinigungseinrichtung 7 verfügen kann. Hierbei könnten beispielsweise die Behälter 8 zurück in eine Speichereinrichtung gefahren werden und der Reinigungsbetrieb könnte somit auch bei dem Transportsegment 4 ausgelöst werden.

Alternativ könnte die in den Fig. 1 - 4 gezeigte Steuereinrichtung 6 bereits in dem Füller 2 oder dem Verschließer 3 angeordnet sein und dabei sowohl den Füller 2, den Verschließer 3 und das Transportsegment 5 steuern. Hierbei wird ein Signal zur Auslösung des Reinigungsbetriebs innerhalb der Steuereinrichtung 6 generiert.

Mit dem erfindungsgemäßen Verfahren ist es möglich, während einer Störung der Verarbeitungsmaschinen 2, 3 einen Reinigungsbetrieb auszulösen. Hierdurch wird die Zeit zur Beseitigung der Störung genutzt, um den Reinigungsbetrieb durchzuführen und folglich wird keine gesonderte Reinigungsschicht benötigt, um das Transportsegment 5 zu reinigen. Darüber hinaus erfolgt die Reinigung in kürzeren Reinigungszyklen.

Es versteht sich, dass die in den zuvor beschriebenen Ausführungsbeispielen genannten Merkmale nicht auf diese speziellen Kombinationen beschränkt sind und in beliebigen anderen Kombinationen möglich sind.

## Patentansprüche

1. Verfahren zum Reinigen eines Transportsegments (5) in einer Behälterbehandlungsanlage (1),
**dadurch gekennzeichnet, dass**
der Reinigungsbetrieb für das Transportsegment (5) bei einem störungsbedingten Betriebsstillstand einer vor- und/oder nachlaufenden Verarbeitungsmaschine (2, 3) ausgelöst wird.

2. Verfahren nach Anspruch 1, wobei der Reinigungsbetrieb nach einer Störungsbehebung der vor- und/oder nachlaufenden Verarbeitungsmaschine (2, 3) abgebrochen wird, auch wenn keine vollständige Reinigung des Transportsegments (5) erfolgt ist.

3. Verfahren nach Anspruch 1 oder 2, wobei nach dem Reinigungsbetrieb Daten darüber erfasst und gespeichert werden, welche Abschnitte des Transportsegments (5) innerhalb des Reinigungsbetriebs gereinigt wurden.

4. Verfahren nach wenigstens einem der vorangegangenen Ansprüche, wobei wenigstens ein Parameter des Reinigungsbetriebs abhängig von einer Kenngröße der Störung der vor- und/oder nachlaufenden Verarbeitungsmaschine (2, 3) ermittelt wird.

5. Verfahren nach Anspruch 4, wobei der Parameter die Dauer des Reinigungsbetriebs ist.

6. Verfahren nach wenigstens einem der vorangegangenen Ansprüche, wobei der Reinigungsbetrieb unmittelbar nach dem Auslösen abhängig von einer Kenngröße der Störung der vor- und/oder nachlaufenden Verarbeitungsmaschine (2, 3) automatisch abgebrochen wird.

7. Verfahren nach wenigstens einem der vorangegangenen Ansprüche, wobei Steuersignale zur Auslösung des Reinigungsbetriebs und/oder Daten mit Kenngrößen des Betriebsstillstands über einen Steuerungsbus (10) übertragen werden.

8. Verfahren nach wenigstens einem der vorangegangenen Ansprüche, wobei der Reinigungsbetrieb vor oder nach einer Schlafsteuerung des Transportsegments (5) eingeleitet wird.

9. Verfahren nach Anspruch 8, wobei das Transportsegment (5) mittels der Schlafsteuerung nach einer Reinigung stillgesetzt und in Bereitschaft gehalten wird.

10. Behälterbehandlungsanlage (1), insbesondere zur Durchführung des Verfahrens nach Anspruch 1, mit wenigstens einem Transportsegment (5) und wenigstens einer dem Transportsegment (5) vor- und/oder nachlaufenden Verarbeitungsmaschine (2, 3), wobei eine Reinigungseinrichtung (7) zur Reinigung des Transportsegments (5) ausgebildet ist, **dadurch gekennzeichnet, dass**
eine Steuereinrichtung (6) dazu ausgebildet ist, dass der Reinigungsbetrieb für das Transportsegment (5) bei einem störungsbedingten Betriebsstillstand einer vor- und/oder nachlaufenden Verarbeitungsmaschine (2, 3) automatisch ausgelöst wird.

11. Behälterbehandlungsanlage (1) nach Anspruch 10, wobei die Steuereinrichtung (6) mit einem Steuerungsbus (10) verbunden ist.

12. Behälterbehandlungsanlage (1) nach Anspruch 10 oder 11, wobei das Transportsegment zum Transport von Behältern eine Gliederbandkette mit einer Vielzahl von Gliedern umfasst, wobei benachbarte Glieder über Bolzen und Gelenkaugen miteinander verbunden sind.

## Claims

1. Method for cleaning a transport segment (5) in a container treatment system (1), **characterized in that**
the cleaning operation for the transport segment (5) is initiated at a fault-related operational standstill of a leading and/or trailing processing machine (2, 3).

2. Method according to claim 1, wherein the cleaning operation is aborted after troubleshooting the leading and/or trailing processing machine (2, 3), even if no complete cleaning of the transport segment (5) has been carried out.

3. Method according to claim 1 or 2, wherein after the cleaning operation data are acquired and stored regarding sections of the transport segment (5) which were cleaned during the cleaning operation.

4. Method according to at least one of the preceding claims, wherein at least one parameter of the cleaning operation is determined in response to a characteristic of the fault of the leading and/or trailing processing machine (2, 3).

5. Method according to claim 4, wherein the parameter is the duration of the cleaning operation.

6. Method according to at least one of the preceding claims, wherein the cleaning operation is automatically aborted directly after initiation in response to a characteristic of the fault of the leading and/or trailing processing machine (2, 3).

7. Method according to at least one of the preceding claims, wherein control signals for initiating the cleaning operation and/or data with characteristics of the operational standstill are transmitted via a control bus (10).

8. Method according to at least one of the preceding claims, wherein the cleaning operation is started before or after a sleep control of the transport segment (5).

9. Method according to claim 8, wherein the transport segment (6) is stopped by means of the sleep control after cleaning and is kept ready.

10. Container treatment system (1), particularly for performing the method according to claim 1, comprising at least one transport segment (5) and at least one processing machine (2, 3) which is leading and/or trailing with respect to the transport segment (5), a cleaning device (7) being implemented for cleaning the transport segment (5),
**characterized in that**
a control device (6) is configured to automatically initiate the cleaning operation for the transport segment (5) in case of a fault-related operational standstill of a leading and/or trailing processing machine (2, 3).

11. Container treatment system (1) according to claim 10, wherein the control device (6) is connected to a control bus (10).

12. Container treatment system (1) according to claim 10 or 11, wherein the transport segment for transporting containers comprises a link chain with a multitude of links, wherein neighboring links are interconnected via pins and joint eyes.

## Revendications

1. Procédé de nettoyage d'un segment de transport (5) dans une installation de traitement de récipients ou contenants (1),
**caractérisé**
**en ce que** le fonctionnement en mode nettoyage pour le segment de transport (5) est déclenché dans le cas d'un arrêt de fonctionnement, dû à un défaut, d'une machine de traitement (2, 3) située en amont et/ou en aval.

2. Procédé selon la revendication 1, d'après lequel le fonctionnement en mode nettoyage est interrompu après une suppression du défaut sur la machine de traitement (2, 3) située en amont et/ou en aval, même si le nettoyage du segment de transport (5) n'a pas été effectué de manière complète.

3. Procédé selon la revendication 1 ou la revendication 2, d'après lequel après le fonctionnement en mode nettoyage, des données concernant lesquels des tronçons du segment de transport (5) ont été nettoyés pendant le fonctionnement en mode nettoyage, sont relevées et mémorisées.

4. Procédé selon l'une au moins des revendications précédentes, d'après lequel on détermine au moins un paramètre du fonctionnement en mode nettoyage en fonction d'une grandeur caractéristique du défaut de la machine de traitement (2, 3) située en amont et/ou en aval.

5. Procédé selon la revendication 4, d'après lequel le paramètre est la durée du fonctionnement en mode nettoyage.

6. Procédé selon l'une au moins des revendications précédentes, d'après lequel le fonctionnement en mode nettoyage est automatiquement interrompu directement après le déclenchement, en fonction d'une grandeur caractéristique du défaut de la machine de traitement (2, 3) située en amont et/ou en aval.

7. Procédé selon l'une au moins des revendications précédentes, d'après lequel des signaux de commande pour le déclenchement du fonctionnement en mode nettoyage, et/ou des données avec des grandeurs caractéristiques de l'arrêt de fonctionnement, sont transmis par l'intermédiaire d'un bus de commande (10).

8. Procédé selon l'une au moins des revendications précédentes, d'après lequel le fonctionnement en mode nettoyage est démarré avant ou après une commande de mise en sommeil du segment de transport (5).

9. Procédé selon la revendication 8, d'après lequel après le nettoyage, le segment de transport (5) est arrêté et maintenu en attente au moyen de la commande de mise en sommeil.

10. Installation de traitement de contenants (1), notamment pour la mise en oeuvre du procédé selon la revendication 1, et comprenant au moins un segment de transport (5) et au moins une machine de traitement (2, 3) située en amont et/ou en aval du segment de transport (5), un dispositif de nettoyage (7) étant prévu pour assurer le nettoyage du segment de transport (5), **caractérisée**
**en ce qu'**un dispositif de commande (6) est configuré pour que le fonctionnement en mode nettoyage destiné au segment de transport (5) soit déclenché automatiquement dans le cas d'un arrêt de fonctionnement, dû à un défaut, d'une machine de traitement (2, 3) située en amont et/ou en aval.

11. Installation de traitement de contenants (1) selon la revendication 10, dans laquelle le dispositif de commande (6) est relié à un bus de commande (10).

12. Installation de traitement de contenants (1) selon la revendication 10 ou la revendication 11, dans laquelle le segment de transport pour le transport de contenants comporte une chaine à ruban à maillons avec un grand nombre de maillons, des maillons voisins étant reliés mutuellement par l'intermédiaire de broches et d'oeillets d'articulation.
